# EUROPEAN PATENT SPECIFICATION

(11) **EP 3 747 277 B1**
(45) Date of publication and mention of the grant of the patent: **06.11.2024**
(21) Application number: 19178100.4
(22) Date of filing: 04.06.2019
(51) Int. Cl.: A23L 2/56, A23G 1/00, A23G 1/56, A23L 2/39

(54) **COCOA POWDER FOR BEVERAGES AND METHODS FOR PREPARING THE SAME**
KAKAOPULVER FÜR GETRÄNKE UND VERFAHREN ZUR HERSTELLUNG DAVON
POUDRE DE CACAO POUR BOISSONS ET SES PROCÉDÉS DE PRÉPARATION

(43) Date of publication of application: 09.12.2020
(73) Proprietor: ODC Lizenz AG, 8807 Freienbach (CH)
(72) Inventor: Hühn, Tilo, 8824 Schönenberg (CH)
(74) Representative: Grünecker Patent- und Rechtsanwälte PartG mbB

(56) References cited:
- EP-A1- 3 114 939
- EP-A1- 3 114 942
- WO-A1-2009/055585
- WO-A1-2011/141150
- US-A- 5 338 554
- US-A1- 2011 135 786
- US-A1- 2016 000 110

## Description

### FIELD OF INVENTION

This invention relates to improved methods and/or techniques for the production of chocolate- or cocoa-based beverages. In addition, the invention relates to cocoa beverages and chocolate beverages prepared by said methods, to the use of a cocoa powder for the preparation of a cocoa or chocolate beverage and to an instant cocoa powder.

### BACKGROUND OF THE INVENTION

In general, cocoa powder - which is conventionally understood as the finely ground dry solid residue obtained after extraction of cocoa butter from cocoa liquor, a paste comprising fermented and roasted cacao beans - provides the basis for the preparation of chocolate- or cocoa-based beverages and therefore essentially influences their texture, flavor and nutritional properties.

The preparation of cocoa powder itself begins with the processing of cacao seeds (commonly referred to as cocoa beans) that grow in pods on the *Theobroma* cacao tree. Upon harvesting of the pods, the seeds are usually cleaned to remove all extraneous material, fermented and dried. Fermentation of cocoa begins almost immediately upon exposure to air. Naturally occurring yeast spores settle on the sugary beans and start to split the sugar into carbon dioxide, aroma and alcohol, the latter being further converted into acetic acid by means of microbial activities provided by bacteria. At the final stage of this process, germ within the cacao bean is inactivated by the presence of alcohol, acetic acid and the heat generated by said microbial activities, resulting in a release of enzymes capable of reducing astringency within the bean, which are important to the development of the chocolate flavor. Typically, this natural cocoa fermentation process being spontaneously induced by microbial activities takes place during about two or more days until the microbial activities are inhibited by an excess of acetic acid and/or heat being caused by said microbial activities. Since much of the acid is left within the beans after the fermentation is complete, non-processed cocoa powder tends to exhibit sour and bitter flavors in the final cocoa product caused by the presence of acids. In order to mellow these unpleasant flavors, the fermented and dried nibs are conventionally subjected to elevated temperatures (e.g. during roasting or conching) and/or treated with alkaline salts to neutralize the acidity and to improve the miscibility of the resulting cocoa powder in warm water- a method widely known as "Dutching process".

However, the conventional preparation method of cocoa powder involves a number of disadvantages. For example, it has been shown that alkalization (as performed during Dutching, for example) significantly reduces antioxidant contents in cocoa powder (see e.g., K. B. Miller et al.; J. Agric. Food Chem. 2008, 56(18), 8527-8533). Moreover, in order to effectively separate cocoa butter from liquor, cocoa beans or nibs have to be subjected to high shear stresses and/or high heat to enable ideally complete liquefaction of cocoa butter, and the subsequent extraction by use of mechanical presses (e.g. hydraulic presses or screw presses) or organic solvents imposes further mechanical and chemical burden on the raw cocoa material which potentially leads to a destruction of cellular compartments and further reduce the content of nutritionally beneficial components (e.g. vitamins and antioxidants, such as polyphenols, flavonoids, proanthocyanidines, etc.) and aromas in the final product.

US 6,673,379 B2 discloses a method for the preparation of a drink comprising non-alkalized partially defatted solids and having favorable polyphenol contents, wherein cocoa beans are heated for a time and at a temperature sufficient to loosen the cocoa shells without roasting the cocoa nibs. However, this technique likewise relies on fat extraction by screw pressing and also necessitates solvent extraction deodorization and/or alkalization in order for the cocoa solids to be ready for consumption. US 2011/0135786 A1, US 2016/0000110 A1, WO 2009/055585 A1 and WO 2011/141150 A1 disclose further exemplary methods which employ (partially) defatted, non-alkalized cocoa powder as starting material. However, these methods do not overcome the problems originating from the presence of acids.

Other problems often observed in the preparation of cocoa- or chocolate-based drinks are precipitation of insoluble particles, grainy texture and/or poor flavor properties due to the presence of stabilizing agents (e.g. cellulose powder). To this end, US 8,119,182 B2 discloses a method comprising a step of extracting coarse ground cocoa nibs with water at elevated temperatures and removing insoluble solids in order to provide a fat/oil rich chocolate drink which exhibits the desired characteristics. However, the method does not adequately prevent the presence of acidic and bitter flavors upon use of non-alkalized nibs. US 5,338,554 A discloses a process for producing a soluble cocoa product, which relies upon a series of extraction steps with alcohol and finally with water, wherein the liquid aqueous extract is used for the preparation of the soluble cocoa product.

WO 2010/073117, EP 3 114 942 A1, EP 3 114 939 A1 and EP 3 114 940 A1 disclose methods for processing cocoa beans comprising the formation of a suspension comprising cocoa beans or nibs and water, wet grinding the suspended beans or nibs, heating the suspension, and decanting the same such that said suspension is separated into a water phase, a fat phase and a solid phase, in order to avoid liquefaction of the cocoa fat and formation of a chocolate liqueur during mechanical processing. However, the preparation of cocoa- or chocolate-based beverages is not disclosed.

Accordingly, it remains desirable to provide a simple method for the preparation of cocoa- or chocolate-based beverages with excellent, rich taste, favorable organoleptic properties and high contents of nutritionally beneficial components, and to provide an instant cocoa powder, wherein these properties are preserved during mid- or long-term storage.

### SUMMARY OF THE INVENTION

The present invention solves this object with the subject matter of the claims as defined herein. The advantages of the present invention will be further explained in detail in the section below and further advantages will become apparent to the skilled artisan upon consideration of the invention disclosure.

Generally speaking, in one aspect the present invention provides a method for producing a cocoa beverage comprising the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; e) separating at least cocoa powder from the solid phase, and f) mixing the separated cocoa powder with a water source to provide the cocoa beverage.

In another aspect, the present invention provides a method for producing a chocolate beverage comprising the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; e1) separately processing the three phases, which comprises: 1) neutralizing and/or removing acidic components via the water phase, 2) separating cocoa butter from the fat phase, 3) separating cocoa powder from the solid phase, and 4) separating cocoa aroma and a polyphenolic powder from at least the water phase; e2) recombining the cocoa aroma extract with the cocoa butter extract; e3) mixing the recombined extracts with at least said cocoa powder extract, and optionally with said polyphenolic powder extract and/or milk powder; e4) conching said mixture to prepare a chocolate; e5) optionally comminuting the chocolate; and e6) mixing the chocolate with a water source to provide the chocolate beverage.

A further aspect of the present invention is a cocoa or chocolate beverage manufactured by the aforementioned methods.

In a further aspect of the invention, the use of a cocoa powder for the preparation of a cocoa or chocolate beverage is described, wherein the cocoa powder is obtained by a method comprising the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; e) separating at least cocoa powder from the solid phase, or e1) separately processing the three phases, which comprises: 1) neutralizing and/or removing acidic components formed in the cocoa beans via the water phase, 2) separating cocoa butter from the fat phase, 3) separating cocoa powder from the solid phase, and 4) separating cocoa aroma and a polyphenolic powder from at least the water phase; e2) recombining the cocoa aroma extract with the cocoa butter extract; e3) mixing the recombined extracts with at least said cocoa powder extract, and optionally with said polyphenolic powder extract and/or milk powder; e4) conching said mixture to prepare a chocolate; and e5) comminuting the chocolate; and instantizing the cocoa powder obtained in step e) or the comminuted chocolate obtained in step e5) to obtain the instant cocoa powder.

### BRIEF DESCRIPTION OF THE DRAWINGS

FIG. 1 schematically illustrates an exemplary method of manufacturing a cocoa beverage according to the subject invention.
FIG. 2 illustrates an exemplary method of manufacturing a chocolate-based beverage according to the subject invention.

### DETAILED DESCRIPTION OF THE INVENTION

For a more complete understanding of the present invention, reference is now made to the following description of the illustrative embodiments thereof:
In the present description, a distinction is made between the terms "cocoa beverage" and "chocolate beverage", wherein the former intends to denote cocoa-based drinks based on (partially) defatted cocoa powder and the latter describes cocoa-based drinks based on chocolate.

The method for producing a cocoa beverage according to a first embodiment of the present invention is generally characterized by the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; e) separating at least cocoa powder from the solid phase, and f) mixing the separated cocoa powder with a water source to provide the cocoa beverage. Accordingly, the cocoa powder obtained during this method substantially differs from conventional cocoa powder as it is not produced from cocoa liquor.

Surprisingly, it has been found that despite of the pre-extraction of the cocoa beans/nibs with water during the three-phase separation in step d), the produced cocoa beverage exhibits a rich aromatic profile without unpleasant bitter, astringent or acidic flavors, in combination with high antioxidant contents and satisfactory smooth texture without necessitating alkalization. In addition, the method is simple when compared to traditional methods and enables faster processing from the bean to the prepared drink.

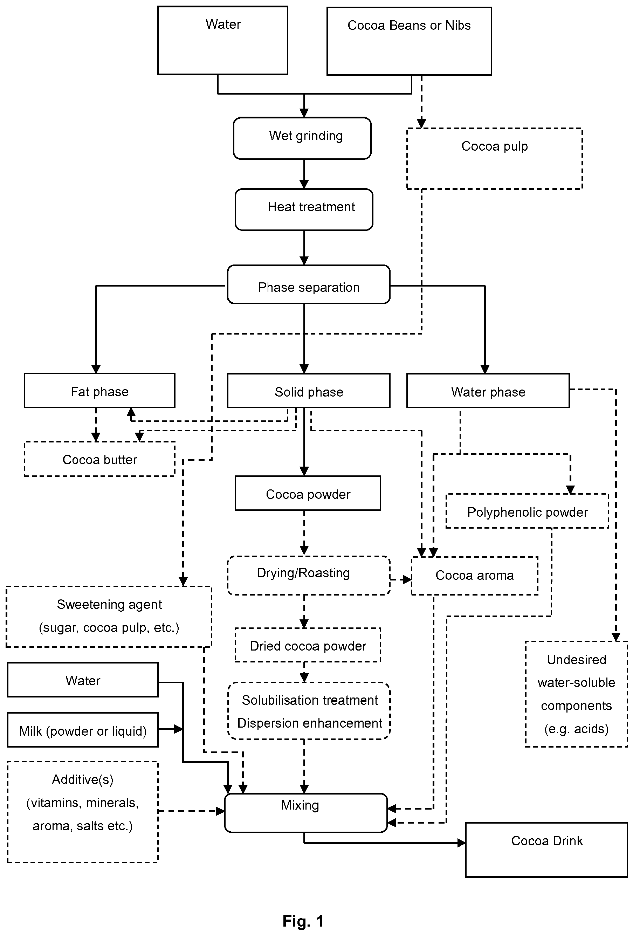

An exemplary overview of the method according to the first embodiment is shown in Fig. 1.

The subject cocoa beverage production technique generally begins with forming a suspension of cocoa beans or nibs by adding water, either prior or during the grinding of the cocoa beans/nibs. The cocoa beans or nibs may be fermented, unfermented, incubated, pre-roasted, or non-roasted cocoa beans or nibs. In one embodiment, green cocoa beans may be processed together with pulp and mucilage (i.e. with only the pod shell being removed) as starting material. While not being particularly limited, the weight ratio of water to cocoa beans/nibs in the formed suspension is preferably between 1:1 to 6:1, more preferably 2:1 to 4:1, especially preferably about 3:1, which may advantageously affect the processability in the further steps (e.g. facilitated pumping, grinding and easier phase separation).

It will be understood that alternative water-containing liquids may also be used in step a), preferably liquids selected from one or more of coffee, tea and liquids having water contents of from 60 to about 95 % by weight, such as fruit juices, fruit juice concentrates, or milk, for example, in order to provide for additional flavors. In such a case, it is preferable that the water content in the formed suspension falls into the above-defined ratios. Since the thermal load in the further method steps is relatively low, temperature-sensitive flavors originating from said liquids are retained and may favorably interact with the primary and secondary flavors of the cocoa bean.

In order to obtain coffee-flavored cocoa products, coffee beans (whole or broken, unroasted or roasted) may be mixed to the fermented cocoa beans/nibs when forming the suspension in water, provided that the cocoa beans/nibs form the major part in the bean mixture so that the content of coffee beans does not interfere or negatively affect the wet milling and phase separation steps. Preferably, the coffee bean content is less than 20% by weight of the bean mixture, more preferably less than 10% by weight.

In step b), the cocoa beans/nibs are subjected to a single or multiple wet grinding step(s), which result in bean particle sizes of preferably 50 µm or smaller, more preferably 40 µm or smaller, even more preferably 20 µm or smaller. In a preferred embdoiment, step b) comprises a step b1) wet grinding said cocoa bean water suspension in a first coarse grinding step in a first mill; and b2) wet grinding said cocoa bean water suspension in a second fine grinding step in a second mill such that cocoa bean particles with an average particle size of 40 µm or less, or preferably 20 µm or less are obtained. The bean particle size reduction may be accomplished by using disc mills (e.g. perforated disc mill), colloid mills (e.g. toothed colloid mills), or corundum stone mills, for example. It is preferable that in at least one grinding step, cocoa bean cells are macerated to enable the solvent (water) to wet the cocoa bean material better due to increased available surface area of the macerated cocoa beans. The methods and devices used for wet milling are not particularly limited as long as undesirable emulsification by significant frictional heat production or high mechanical forces is avoided. When using multiple grinding steps, it may be preferred that a coarse wet grinding step (e.g., optionally with further water) is carried out using a perforated disc mill, and the coarsely milled suspension is then pumped to a toothed colloid mill for a fine grinding step.

After the wet grinding step, the suspension is subjected to a thermal treatment at a temperature of no more than 70°C in step c) in order to reduce the overall thermal load and prevent emulsification. From the viewpoint of a favorable balance of cocoa butter yield and preservation of desirable flavors, such as aromatics, anti-oxidants and/or vitamins, heating temperatures of from 43 to 65°C are preferable. In terms of cocoa butter liquefaction and/or improved mechanical phase separation, a heating temperature range of from 45 to 50°C is particularly preferable. Without being limited thereto, heating of the wet-milled suspension may be carried out by a scrap or tube heat exchanger.

Thereafter, phase separation is carried out in step d) so that three phases, i.e. a water phase (heavy phase), a fat phase (light phase) and a solid phase are obtained, said fat phase comprising cocoa butter as a major component and solids and/or water as minor components and said solid phase comprising cocoa powder and water. In addition, the solid phase may comprise residual cocoa butter in a content of up to 30% by weight, preferably less than 27% by weight, more preferably less than 20% by weight relative to the total dry weight. Preferably, devices employing centrifugal forces may be utilized to achieve mechanical particle separations, such as decanters or nozzle separators. For instance, the suspension may be decanted to separate coarse or large or high mass solids from liquid(s) and then smaller and/or fine solid particles may be further separated from liquids and/or oil products may be separated from non-oil products.

By separating the water phase from the solid phase comprising the cocoa powder, the concentration of acidic components and unpleasant water-soluble aroma components in the cocoa beverage is remarkably reduced without requiring alkalization (or Dutching). Also, if deemed appropriate, water-soluble acids may be added prior to phase separation in any desired amount deemed favorable with regard to the adjustment of the pH conditions and/or for the purpose of improving the flavor development within the cocoa beans or nibs, since their addition does not necessarily result in a sour or bitter taste in the final product.

Multiple phase separation and recombination steps may be employed to achieve an improved separation between the water phase (heavy phase), the fat phase (light phase) and the solid phase. For example, the fat phase obtained by an initial decanting step may be further filtered or centrifuged to separate remaining fine particles or water from the fat phase and the thus obtained fine particles and water may be recombined with the water and solid phases from the initial decanting step or at a later processing stage of said phases. Also, the water phase may be subjected to further purification steps, e.g. by filtration using vacuum rotation filters in order to remove fine particles, which may then be recombined with the solid phase.

Upon separation of the three phases (i.e. the water phase (heavy phase), the fat phase (light phase) and the solid phase), these may be independently processed to separate cocoa butter (from the fat phase), cocoa powder (from the solid phase), cocoa aroma (from the water phase and/or the solid phase) and a polyphenolic concentrate (from the water phase), as is illustrated by Fig. 1.

The fat phase (light phase) may be filtered (e.g. by employing a vibrating screen) and/or conveyed to a 3-phase separator (e.g. centrifuge) to remove fine particles (which may be optionally added to the solid phase prior or during the drying/roasting step) and residue water (which may be optionally added to the water phase prior to aroma recovery). Cocoa butter may be obtained by filtering the purified fat phase.

In step e), cocoa powder is separated from the solid phase, e.g. by drying. The (wet) solid phase obtained after separation in the three phases may be optionally treated with a heatable roll grinder to reduce particle size and begin pre-drying. Also, sugar, sugar solution and/or fruit juices may optionally be added to separated cocoa solids before drying to improve flavor development during the drying/roasting process. Preferably, step e) comprises a step of drying and optionally roasting of the solid phase in a dryer after separation in three phases to obtain cocoa aroma and dried cocoa powder. Further preferably, the solid phase is gently dried and simultaneously roasted at a temperature of between 55 and 100°C, from the viewpoint of reducing the thermal load and preserving the health-inducing components preferably at a temperature selected from between 55 and 70°C under reduced pressure, in order to allow roasted flavors and other aromas to be collected. Preferably, the drying/roasting step is carried out in a mixing device as is disclosed in EP 3 114 941 A1, wherein said mixing device comprises a cylindrical, tubular body arranged with its axis horizontal and closed at its opposite ends by end plates, and having a coaxial heating or cooling jacket through which, for example, diathermic oil or another fluid is intended to flow to keep the internal wall of the body at a predetermined temperature. The tubular body has an inlet and outlet openings for the solid phase. The outlet opening communicates, by means of a duct, with a device for separating the aroma phase from the dried product. The device further comprises a bladed rotor is supported for rotation in the tubular body, its blades being arranged as a helix and oriented for centrifuging the solid phase being processed and simultaneously transporting it towards the outlet opening. Using this mixing device advantageously allows the drying/roasting step and the separation of the roasted flavors and other aromatics to be carried out continuously and also remarkably accelerates the processing of cocoa beans up to the preparation of the cocoa powder (dry cocoa matter), resulting in processing durations of less than 20 minutes, typically less than 15 minutes.

In a preferred embodiment, the cocoa powder produced in step e) has a total polyphenol content of at least 20 mg ECE((-)-epicatechin equivalents)/g of defatted dry matter, more preferably at least 30 mg ECE/g of defatted dry matter, especially preferably at least 40 mg ECE/g of defatted dry matter. Preferably, the cocoa powder has a flavonoid concentration of at least 10 mg ECE/g of defatted dry matter, more preferably at least 20 mg ECE/g of defatted dry matter, especially preferably at least 30 mg ECE/g of defatted dry matter. In another preferred embodiment, the cocoa powder has a proanthocyanidine concentration of at least 2 mg PCE(procyanidin B2 equivalents)/g of defatted dry matter, more preferably at least 3 mg PCE/g of defatted dry matter, especially preferably at least 4 mg PCE/g of defatted dry matter.

The total polyphenol content, and the flavonoid and proanthocyanidine concentrations may be determined by common spectrophotometric methods known to the skilled artisan. For example, the total polyphenol content may be determined by using a Folin-Ciocalteu assay with (-)-epicatechin as standard, in accordance with the method disclosed in Folin-Ciocalteu index, Off. J. Eur. Communities 1990, 41, 178-179, and Cooper et al., J. Agric. Food Chem 2008, 56, 260-265. The total flavonoid content may be determined by means of an aluminum chloride colorimetric assay, for example, in accordance with Emelda et al. Int. J. ChemTech Res. 2014, 6(4), 2363-2367, using (-)-epicatechin as standard. An acid-butanol method (such as e.g. Bates-Smith assay or a Porter method) using procyanidin B2 as standard may be employed to spectrophotometrically determine the content of proanthocyanidine.

Steps a) to e) are preferably performed without use of non-water based solvents in order to avoid additional steps of solvent removal and to preserve high contents of nutritionally beneficial components in the cocoa powder extract.

In the final step f) of the method according to the first embodiment, the separated cocoa powder is mixed with a water source to provide the cocoa beverage. While the water source is not particularly limited as long as it enables sufficient dispersion of cocoa powder particles, it is preferably selected from water or water-containing liquids as mentioned above with respect to step a). Especially preferably, the water source is water or milk (which includes, but is not limited to cow milk, goat milk, soy milk, rice milk, coconut milk, almond milk, flax milk, hemp milk, oat milk, or the like).

The (dried) cocoa powder may be subjected to a solubilisation treatment or dispersion enhancement prior to step f). For this purpose, however, it is preferred that such a treatment is performed without addition of alkaline agents, such as in the enzymatic process disclosed n WO 2008/059064 A1, for example. Further examples of such methods will be known to the skilled artisan.

In general, it is preferred that the cocoa powder is non-alkalized in order to preserve high contents of nutritionally beneficial components.

Further additives (e.g. vitamins, minerals, salts, lecithin), flavors (e.g. vanilla, caramel, cinnamon, nut flavors), thickening agents (e.g. corn starch) and sweeteners (such as sugar (e.g. sucrose, lactose, dextrose, maltose, fructose, saccharose) or cocoa pulp) may be added during or before the mixing step. However, in a further preferred embodiment, steps a) to e) are performed without addition of a non-cocoa fruit constituents apart from the water source. For instance, as indicated in Fig. 1, the method may further comprise a step of separating polyphenolic powder from at least the water phase (e.g. by reverse flow distillation), and recombining the polyphenolic powder with the cocoa powder prior to the mixing with the water source in order to further increase the content of antioxidant in the final cocoa beverage; cocoa aroma extracted from the water phase and/or the solid phase may be recombined with the cocoa powder in the mixing step in order to further enrich the taste of the beverage; and/or cocoa pulp may be used as an optional sweetening agent, so that cocoa beverages with a large variety of organoleptic and nutritional properties may be manufactured which make ideal use of the natural components of the cocoa fruit.

Also, it is generally preferred that the steps prior to the mixing with the water source are performed at temperatures of no more than 70°C, whereas mixing with the water source is preferably performed at temperatures of between 40°C and 85°C.

The mixing step f) may be carried out by suitable techniques and devices known to the skilled artisan.

In a preferred embodiment, the water source is mixed with the cocoa powder directly after step e). In general, in case of microorganism spoilage of cocoa extracted materials (i.e. cocoa butter, cocoa powder, cocoa aroma and polyphenolic concentrate), deodorization may be accomplished by use of a vacuum de-aerator. Moreover, if microorganism contamination occurs, a high pressure treatment such as pascalisation is possible (e.g., which is desirable because it can preserve aromatic compounds). If both microorganism spoilage and contamination occurs, heat treatment and deodorization may be employed. However, the method according to the present invention advantageously allows a fast processing of the cocoa beans/nibs, so that growth of microorganisms may be kept at a minimum.

In view of the above, the present invention according to the first embodiment enables rapid, simple and cost-effective production of high-quality cocoa beverages while preserving the contents of nutritionally valuable components.

In a second embodiment, the present invention relates to a method for producing a chocolate beverage comprising the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; e1) separately processing the three phases, which comprises: 1) neutralizing and/or removing acidic components (e.g. acetic or citric acid formed in the cocoa beans during fermentation) via the water phase, 2) separating cocoa butter from the fat phase, 3) separating cocoa powder from the solid phase, and 4) separating cocoa aroma and a polyphenolic powder from at least the water phase; e2) recombining the cocoa aroma extract with the cocoa butter extract; e3) mixing the recombined extracts with at least said cocoa powder extract, and optionally with said polyphenolic powder extract and/or milk powder; e4) conching said mixture to prepare a chocolate; e5) optionally comminuting the chocolate; and e6) mixing the chocolate with a water source to provide the chocolate beverage.

In contrast to the first embodiment, the method of the second embodiment differs in that in step e) the three phases are separately processed and suitably recombined and conched to provide a chocolate, which is then mixed with a water source in step e5) in analogy to step f) of the first embodiment to provide a chocolate drink. It will be understood that the first and second embodiments may be combined as desired, and that the preferred features of steps a) to f) according to the first embodiment may likewise apply for the second embodiment.

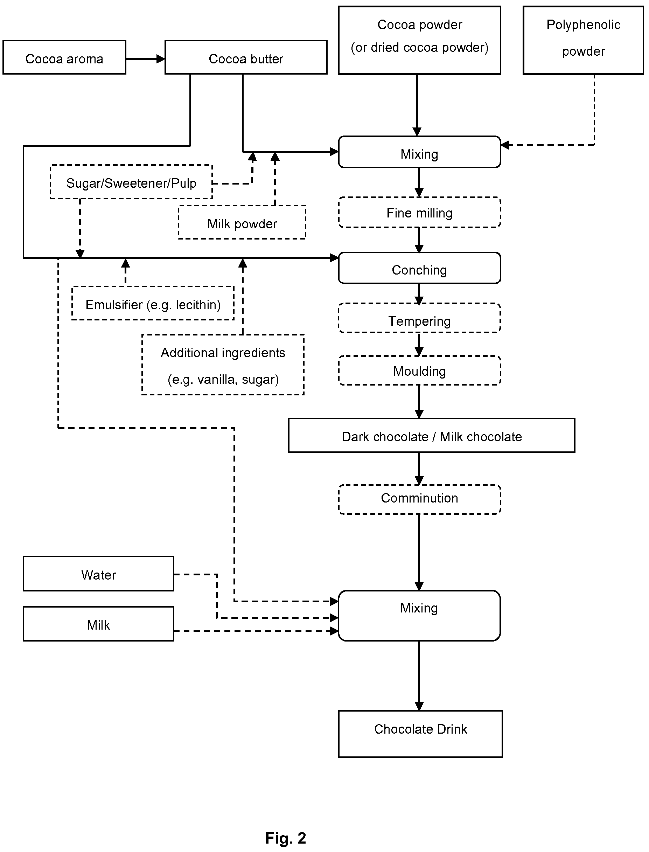

An exemplary scheme of a method starting with step e2) according to the second embodiment is shown in Fig. 2. Herein, cocoa aroma extracts obtained from dearomatisation of the water phase and/or optionally the roasted cocoa aroma obtained from the drying/roasting step (as indicated in Fig. 1) are first added to the cocoa butter in step e2). Before being subjected to a conching step, the dried and roasted solid cocoa powder is mixed with cocoa butter with added aroma in step e3) and preferably fine milled. Polyphenolic powder may be added to the mixture as desired to provide more intense flavors and higher contents of anti-oxidants in the final product. Additional tailoring of flavor or development of flavor may be performed by adding one or more of sugar, sweetener, cocoa pulp and/or fruit juices. For the preparation of milk chocolate, milk powder is further added, preferably prior to the mixing step e3). Optionally, an emulsifying agent (e.g. lecithin) may be added prior to conching to reduce viscosity, control sugar crystallization and the flow properties of chocolate, and help in the homogeneous mixing of ingredients. Also, additional ingredients and flavors, such as e.g. vanilla, rum and so on may be added prior to or during the conching step e4). The conching process generally redistributes the substances from the dry cocoa that create flavor into the fat phase, while removing unwanted acidic components from the chocolate, reducing moisture, and mellowing the flavor of the product. The temperature of the conche is controlled and varies depending on the different types of chocolate (from around 49 °C for milk chocolate to up to 82 °C for dark chocolate). While being to some degree dependent on the temperature, the conching duration in conventional chocolate manufacturing processes generally ranges from 16 up to 72 hours in order to achieve good results. In the method according to the present invention, the conching duration is preferably less than 16 hours, more preferably less than 12 hours, typically 10 hours or less. Thus, a loss of desirable aroma characteristics as observed at long conching times does not occur. At this stage, the conched chocolate typically has a total polyphenol content of at least 5 mg ECE/g of defatted dry matter, more preferably at least 10 mg ECE/g of defatted dry matter, especially preferably at least 20 mg ECE/g of defatted dry matter. Preferably, the chocolate has a flavonoid concentration of at least 5 mg ECE/g of defatted dry matter, more preferably at least 10 mg ECE/g of defatted dry matter. In another preferred embodiment, the chocolate has a proanthocyanidine concentration of at least 1 mg PCE/g of defatted dry matter. After an optional tempering and/or moulding step, the obtained chocolate may be subjected to a comminution step (e.g. by grinding, shaving etc.) to facilitate the dissolution and melting of the chocolate in the water source in the mixing step e6). Step e6) is preferably performed at temperatures of between 50°C and 85°C.

In a third embodiment, the present invention relates to cocoa or chocolate beverages manufactured by the method according to the first and second embodiments described above, respectively. The cocoa and chocolate beverages are characterized by excellent organoleptic properties and high contents of nutritionally valuable components when compared to conventionally produced cocoa-based beverages.

A fourth embodiment of the present invention is defined by the use of a cocoa powder for the preparation of a cocoa or chocolate beverage, wherein the cocoa powder is obtained by a method comprising the separation of a water phase (heavy phase) and a solid phase from an aqueous suspension of wet ground cocoa beans, and recovering the cocoa powder from the solid phase. The use according to the invention enables production of cocoa or chocolate beverages with surprisingly rich flavor and high preserved contents of natural cocoa ingredients despite the pre-extraction with water.

The cocoa powder used according to the fourth embodiment of the invention is prepared by a method comprising the separation of an aqueous suspension of wet ground cocoa beans or nibs into three phases, i.e. a water phase (heavy phase), a fat phase (light phase) and a solid phase, said fat phase comprising cocoa butter as a major component and solids and/or water as minor components and said solid phase comprising the cocoa powder and water. Said method comprises the steps of: a) adding water to cocoa beans or nibs to form a suspension; b) wet grinding said suspension; c) subjecting said suspension to a heat treatment at a temperature of 70°C or less; d) separating the suspension into a water phase (heavy phase), a fat phase (light phase) and a solid phase, said fat phase comprising cocoa butter as a major component and solids and/or water as minor components and said solid phase comprising cocoa powder and water; and e) separating at least cocoa powder from the solid phase. Especially preferred methods of cocoa powder preparation are described with respect to the first and second embodiments above.

In a fifth embodiment, the present invention relates to an instant cocoa powder obtained by instantizing the cocoa powder separated in step e) of the method according to the first embodiment or the comminuted chocolate in step e5) of the method according to the second embodiment to obtain the instant cocoa powder.

The wording "instantizing", as used herein, denotes any processing step which enhances solubility and/or dispersibility of the cocoa/chocolate powder. Suitable methods include, but are not limited to agglomeration techniques such as e.g. steam agglomeration, fluidized bed agglomeration, freeze drying agglomeration, thermal agglomeration or spray drying. In preferred embodiments, instantization is performed starting with mixtures comprising the cocoa/chocolate powder, a hydrophilic agent (e.g. sugars selected from water-soluble monosaccharides, disaccharides, polysaccharides and mixtures thereof; polyols selected from sorbitol, glycerol, erythritol, maltitol, isomalt, mannitol, lactitol, threitol, arabitol, ribitol and xylitol) and an emulsifying agent (e.g. lecithin), optionally in a blend with other additives, which may be selected from bulking agents, aromas, milk solids, coloring agents, vitamins, polyphenols (including polyphenolic powder extracted from at least the water phase), nutraceuticals, and stabilizing agents (e.g., maltodextrin or cellulose-based stabilizers as those disclosed in US 4,980,193 A or US 4,311,717 A), for example. When using such mixtures, it may be preferable that the components are not added during the preparation of the cocoa/chocolate powder. Preferably, the cocoa/chocolate powder used for instantization has an average particle size of 2 to 100 µm, more preferably of 5 to 50 µm.

Once given the above disclosure, many other features, modifications, and improvements will become apparent to the skilled artisan.

## Claims

1. A method for producing a cocoa beverage comprising the steps of:
a) adding water to cocoa beans or nibs to form a suspension;
b) wet grinding said suspension;
c) subjecting said suspension to a heat treatment at a temperature of 70°C or less;
d) separating the suspension into a water phase (heavy phase), a fat phase (light phase) and a solid phase, said fat phase comprising cocoa butter as a major component and solids and/or water as minor components and said solid phase comprising cocoa powder and water;
e) separating at least cocoa powder from the solid phase, and
f) mixing the separated cocoa powder with a water source to provide the cocoa beverage.

2. The method according to claim 1, wherein step e) comprises a step of drying and optionally roasting of the solid phase in a dryer after separation in three phases to obtain cocoa aroma and dried cocoa powder.

3. The method according to any of claims 1 or 2, wherein the separated cocoa powder is mixed with at least water and/or milk directly after step e).

4. A method for producing a chocolate beverage comprising the steps of:
a) adding water to cocoa beans or nibs to form a suspension;
b) wet grinding said suspension;
c) subjecting said suspension to a heat treatment at a temperature of 70°C or less;
d) separating the suspension into a water phase (heavy phase), a fat phase (light phase) and a solid phase, said fat phase comprising cocoa butter as a major component and solids and/or water as minor components and said solid phase comprising cocoa powder and water;
e1) separately processing the three phases, which comprises:
1) neutralizing and/or removing acidic components formed in the cocoa beans via the water phase,
2) separating cocoa butter from the fat phase,
3) separating cocoa powder from the solid phase, and
4) separating cocoa aroma and a polyphenolic powder from at least the water phase;
e2) recombining the cocoa aroma extract with the cocoa butter extract;
e3) mixing the recombined extracts with at least said cocoa powder extract, and optionally with said polyphenolic powder extract and/or milk powder;
e4) conching said mixture to prepare a chocolate;
e5) optionally comminuting the chocolate; and
e6) mixing the chocolate with a water source to provide the chocolate beverage.

5. The method according to claim 4, wherein step 3) comprises a step of drying and optionally roasting of the solid phase in a dryer after separation in three phases to obtain cocoa aroma and dried cocoa powder.

6. The method according to any of the preceding claims, wherein step b) comprises:
b1) wet grinding said cocoa bean water suspension in a first coarse grinding step in a first mill; and
b2) wet grinding said cocoa bean water suspension in a second fine grinding step in a second mill such that cocoa bean particles with an average particle size of 40 micrometers or less, preferably an average particle size of 20 micrometers, are obtained.

7. The method according to any of the preceding claims, wherein the water source is water or milk and/or wherein steps a) to e) are performed without use of non-water solvents.

8. The method according any of the preceding claims, wherein the cocoa powder is non-alkalized.

9. The method according any of the preceding claims, comprising a step of separating polyphenolic powder from at least the water phase, and recombining the polyphenolic powder with the cocoa powder prior to the mixing with the water source.

10. The method according to any of the preceding claims, wherein the steps prior to the mixing with the water source are performed at temperatures of no more than 70°C and/or wherein mixing with the water source is performed at temperatures of between 40°C and 85°C.

11. The method according to any of the preceding claims, wherein steps a) to e) are performed without addition of a non-cocoa fruit constituent apart from the water source.

12. A cocoa or chocolate beverage manufactured by the method according to any of claims 1 to 11.

13. Use of a cocoa powder for the preparation of a cocoa or chocolate beverage wherein the cocoa powder is obtained by a method comprising the steps of:
a) adding water to cocoa beans or nibs to form a suspension;
b) wet grinding said suspension;
c) subjecting said suspension to a heat treatment at a temperature of 70°C or less;
d) separating the suspension into a water phase (heavy phase), a fat phase (light phase) and a solid phase, said fat phase comprising cocoa butter as a major component and solids and/or water as minor components and said solid phase comprising cocoa powder and water; and
e) separating at least cocoa powder from the solid phase.

14. An instant cocoa powder obtained by a method comprising the steps of:
a) adding water to cocoa beans or nibs to form a suspension;
b) wet grinding said suspension;
c) subjecting said suspension to a heat treatment at a temperature of 70°C or less;
d) separating the suspension into a water phase (heavy phase), a fat phase (light phase) and a solid phase, said fat phase comprising cocoa butter as a major component and solids and/or water as minor components and said solid phase comprising cocoa powder and water;
e) separating at least cocoa powder from the solid phase, or
e1) separately processing the three phases, which comprises:
1) neutralizing and/or removing acidic components formed in the cocoa beans via the water phase,
2) separating cocoa butter from the fat phase,
3) separating cocoa powder from the solid phase, and
4) separating cocoa aroma and a polyphenolic powder from at least the water phase;
e2) recombining the cocoa aroma extract with the cocoa butter extract;
e3) mixing the recombined extracts with at least said cocoa powder extract, and optionally with said polyphenolic powder extract and/or milk powder;
e4) conching said mixture to prepare a chocolate; and
e5) comminuting the chocolate; and
instantizing the cocoa powder obtained in step e) or the comminuted chocolate obtained in step e5) to obtain the instant cocoa powder.

## Patentansprüche

1. Ein Verfahren zur Herstellung eines Kakaogetränks, welches die folgenden Schritte umfasst:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die feste Phase Kakaopulver und Wasser enthält;
e) Abtrennen des Kakaopulvers zumindest von der festen Phase und
f) Vermischen des abgetrennten Kakaopulvers mit einer Wasserquelle, um das Kakaogetränk herzustellen.

2. Verfahren nach Anspruch 1, wobei Schritt e) einen Schritt des Trocknens und gegebenenfalls des Röstens der festen Phase in einem Trockner nach der Trennung in drei Phasen umfasst, um Kakaoaroma und getrocknetes Kakaopulver zu erhalten.

3. Verfahren nach einem der Ansprüche 1 oder 2, wobei das abgetrennte Kakaopulver unmittelbar nach Schritt e) zumindest mit Wasser und/oder Milch vermischt wird.

4. Ein Verfahren zur Herstellung eines Schokoladengetränks, das die folgenden Schritte umfasst:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die feste Phase Kakaopulver und Wasser enthält;
e1) getrenntes Verarbeiten der drei Phasen, umfassend:
1) Neutralisieren und/oder Entfernen der in den Kakaobohnen gebildeten sauren Bestandteile über die Wasserphase,
2) Abtrennen der Kakaobutter von der Fettphase,
3) Abtrennen des Kakaopulvers von der festen Phase, und
4) Abtrennen des Kakaoaromas und eines polyphenolischen Pulvers zumindest aus der Wasserphase;
e2) Rekombinieren des Kakaoaromaextrakts mit dem Kakaobutterextrakt;
e3) Vermischen der rekombinierten Extrakte zumindest mit dem Kakaopulverextrakt und gegebenenfalls mit dem Polyphenolpulverextrakt und/oder Milchpulver;
e4) Conchieren der Mischung zur Herstellung einer Schokolade;
e5) optionales Zerkleinern der Schokolade; und
e6) Vermischen der Schokolade mit einer Wasserquelle, um das Schokoladengetränk bereitzustellen.

5. Verfahren nach Anspruch 4, wobei Schritt 3) einen Schritt des Trocknens und gegebenenfalls des Röstens der festen Phase in einem Trockner nach der Trennung in drei Phasen umfasst, um Kakaoaroma und getrocknetes Kakaopulver zu erhalten.

6. Das Verfahren nach einem der vorhergehenden Ansprüche, wobei Schritt b) umfasst:
b1) Nassvermahlen der Kakaobohnen-Wasser-Suspension in einem ersten Grobvermahlungsschritt in einer ersten Mühle; und
b2) Nassvermahlen der Kakaobohnen-Wasser-Suspension in einem zweiten Feinvermahlungsschritt in einer zweiten Mühle, so dass Kakaobohnenpartikel mit einer durchschnittlichen Partikelgröße von 40 Mikrometern oder weniger, vorzugsweise einer durchschnittlichen Partikelgröße von 20 Mikrometern, erhalten werden.

7. Verfahren nach einem der vorhergehenden Ansprüche, wobei die Wasserquelle Wasser oder Milch ist und/oder wobei die Schritte a) bis e) ohne Verwendung von nicht-wässrigen Lösungsmitteln durchgeführt werden.

8. Verfahren nach einem der vorhergehenden Ansprüche, wobei das Kakaopulver nicht alkalisiert ist.

9. Verfahren nach einem der vorhergehenden Ansprüche, umfassend einen Schritt der Abtrennung des polyphenolischen Pulvers zumindest von der Wasserphase und der Rekombination des polyphenolischen Pulvers mit dem Kakaopulver vor dem Vermischen mit der Wasserquelle.

10. Verfahren nach einem der vorhergehenden Ansprüche, wobei die Schritte vor dem Vermischen mit der Wasserquelle bei Temperaturen von nicht mehr als 70°C durchgeführt werden und/oder wobei das Vermischen mit der Wasserquelle bei Temperaturen zwischen 40°C und 85°C durchgeführt wird.

11. Verfahren nach einem der vorhergehenden Ansprüche, wobei die Schritte a) bis e) mit Ausnahme der Wasserquelle ohne Zugabe eines Nicht-Kakaofruchtbestandteils durchgeführt werden.

12. Kakao- oder Schokoladengetränk, hergestellt nach dem Verfahren gemäß einem der Ansprüche 1 bis 11.

13. Verwendung eines Kakaopulvers für die Zubereitung eines Kakao- oder Schokoladengetränks,
wobei das Kakaopulver durch ein Verfahren erhalten wird, das die folgenden Schritte umfasst:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die feste Phase Kakaopulver und Wasser enthält; und
e) Abtrennem mindestens des Kakaopulvers von der festen Phase.

14. Instant-Kakaopulver, das durch ein Verfahren erhalten wird, das die folgenden Schritte umfasst:
a) Zugeben von Wasser zu Kakaobohnen oder Kakaonibs, um eine Suspension zu bilden;
b) Nassvermahlen der Suspension;
c) Wärmebehandeln der Suspension bei einer Temperatur von 70°C oder weniger;
d) Trennen der Suspension in eine Wasserphase (schwere Phase), eine Fettphase (leichte Phase) und eine feste Phase, wobei die Fettphase Kakaobutter als Hauptbestandteil und Feststoffe und/oder Wasser als Nebenbestandteile enthält und die feste Phase Kakaopulver und Wasser enthält;
e) Abtrennen zumindest des Kakaopulvers von der festen Phase, oder
e1) getrenntes Verarbeiten der drei Phasen, umfassend:
1) das Neutralisieren und/oder Entfernen der in den Kakaobohnen gebildeten sauren Bestandteile über die Wasserphase,
2) das Abtrennen der Kakaobutter von der Fettphase,
3) das Abtrennen des Kakaopulvers von der festen Phase, und
4) das Abtrennen des Kakaoaromas und eines polyphenolischen Pulvers zumindest aus der Wasserphase;
e2) Rekombinieren des Kakaoaromaextrakts mit dem Kakaobutterextrakt;
e3) Vermischen der rekombinierten Extrakte zumindest mit dem Kakaopulverextrakt und gegebenenfalls mit dem Polyphenolpulverextrakt und/oder Milchpulver;
e4) Conchieren der Mischung zur Herstellung einer Schokolade;
e5) optionales Zerkleinern der Schokolade; und
Instantisierung des in Schritt e) erhaltenen Kakaopulvers oder der in Schritt e5) erhaltenen zerkleinerten Schokolade, um das Instant-Kakaopulver zu erhalten.

## Revendications

1. Procédé de production d'une boisson cacaotée comprenant les étapes consistant à :
a) ajouter de l'eau à des fèves ou à des éclats de fèves de cacao pour former une suspension ;
b) broyer à l'état humide ladite suspension ;
c) soumettre ladite suspension à un traitement à la chaleur à une température de 70°C ou moins ;
d) séparer la suspension en une phase aqueuse (phase lourde), une phase grasse (phase légère) et une phase solide, ladite phase grasse comprenant du beurre de cacao comme composant majeur et des matières solides et/ou de l'eau comme composants mineurs et ladite phase solide comprenant de la poudre de cacao et de l'eau ;
e) séparer au moins une poudre de cacao de la phase solide, et
f) à mélanger la poudre de cacao séparée avec une source d'eau pour fournir la boisson cacaotée.

2. Procédé selon la revendication 1, dans lequel l'étape e) comprend une étape de séchage et éventuellement de torréfaction de la phase solide dans un séchoir après une séparation en trois phases pour obtenir un arôme de cacao et de la poudre sèche de cacao.

3. Procédé selon l'une quelconque des revendications 1 ou 2, dans lequel la poudre de cacao séparée est mélangée avec au moins de l'eau et/ou du lait directement après l'étape e).

4. Procédé de production d'une boisson chocolatée comprenant les étapes consistant à :
a) ajouter de l'eau à des fèves ou à des éclats de fèves de cacao pour former une suspension ;
b) broyer à l'état humide ladite suspension ;
c) soumettre ladite suspension à un traitement à la chaleur à une température de 70°C ou moins ;
d) séparer la suspension en une phase aqueuse (phase lourde), une phase grasse (phase légère) et une phase solide, ladite phase grasse comprenant du beurre de cacao comme composant majeur et des matières solides et/ou de l'eau comme composants mineurs et ladite phase solide comprenant de la poudre de cacao et de l'eau ;
e1) effectuer séparément un traitement des trois phases, qui comprend :
1) la neutralisation et/ou le retrait des composants acides formés dans les fèves de cacao par l'intermédiaire de la phase aqueuse,
2) la séparation du beurre de cacao de la phase grasse,
3) la séparation de la poudre de cacao de la phase solide, et
4) la séparation de l'arôme de cacao et d'une poudre polyphénolique d'au moins la phase aqueuse ;
e2) recombiner l'extrait d'arôme de cacao avec l'extrait de beurre de cacao ;
e3) mélanger les extraits recombinés avec au moins ledit extrait de poudre de cacao, et éventuellement avec ledit extrait de poudre polyphénolique et/ou de poudre de lait ;
e4) effectuer le conchage dudit mélange pour préparer un chocolat ;
e5) éventuellement broyer finement le chocolat ; et
e6) mélanger le chocolat avec une source d'eau pour fournir la boisson chocolatée.

5. Procédé selon la revendication 4, dans lequel l'étape 3) comprend une étape de séchage et éventuellement la torréfaction de la phase solide dans un séchoir après une séparation en trois phases pour obtenir l'arôme de cacao et la poudre sèche de cacao.

6. Procédé selon l'une quelconque des revendications précédentes, dans lequel l'étape b) comprend :
b1) le broyage à l'état humide de ladite suspension aqueuse de fèves de cacao dans une première étape de broyage grossier dans un premier moulin ; et
b2) le broyage à l'état humide de ladite suspension aqueuse de fèves de cacao en une seconde étape de broyage fin dans un second moulin de sorte que des particules de fèves de cacao ayant une taille moyenne de particule de 40 micromètres ou moins, préférablement une taille moyenne de particule de 20 micromètres, sont obtenues.

7. Procédé selon l'une quelconque des revendications précédentes, dans lequel la source d'eau est l'eau ou le lait et/ou dans lequel les étapes a) à e) sont exécutées sans utilisation de solvants non aqueux.

8. Procédé selon l'une quelconque des revendications précédentes, dans lequel la poudre de cacao est non alcalinisée.

9. Procédé selon l'une quelconque des revendications précédentes, comprenant une étape de séparation de poudre polyphénolique à partir d'au moins la phase aqueuse, et de recombinaison de la poudre polyphénolique avec la poudre de cacao avant le mélange avec la source d'eau.

10. Procédé selon l'une quelconque des revendications précédentes, dans lequel les étapes antérieures au mélange avec la source d'eau sont exécutées à des températures de pas plus de 70°C et/ou dans lequel le mélange avec la source d'eau est exécuté à des températures comprises entre 40°C et 85°C.

11. Procédé selon l'une quelconque des revendications précédentes, dans lequel les étapes a) à e) sont exécutées sans addition de constituant de fruit non cacao à part la source d'eau.

12. Boisson cacaotée ou chocolatée fabriquée selon le procédé selon l'une quelconque des revendications 1 à 11.

13. Utilisation d'une poudre de cacao pour la préparation d'une boisson cacaotée ou chocolatée dans laquelle la poudre de cacao est obtenue par un procédé comprenant les étapes consistant à :
a) ajouter de l'eau à des fèves ou à des éclats de fèves de cacao pour former une suspension ;
b) broyer à l'état humide ladite suspension ;
c) soumettre ladite suspension à un traitement à la chaleur à une température de 70°C ou moins ;
d) séparer la suspension en une phase aqueuse (phase lourde), une phase grasse (phase légère) et une phase solide, ladite phase grasse comprenant du beurre de cacao comme composant majeur et des matières solides et/ou de l'eau comme composants mineurs et ladite phase solide comprenant de la poudre de cacao et de l'eau ; et
e) à séparer au moins une poudre de cacao de la phase solide.

14. Poudre de cacao instantanée obtenue selon un procédé comprenant les étapes consistant à :
a) ajouter de l'eau à des fèves ou à des éclats de fèves de cacao pour former une suspension ;
b) broyer à l'état humide ladite suspension ;
c) soumettre ladite suspension à un traitement à la chaleur à une température de 70°C ou moins ;
d) séparer la suspension en une phase aqueuse (phase lourde), une phase grasse (phase légère) et une phase solide, ladite phase grasse comprenant du beurre de cacao comme composant majeur et des matières solides et/ou de l'eau comme composants mineurs et ladite phase solide comprenant de la poudre de cacao et de l'eau ;
e) séparer au moins une poudre de cacao de la phase solide, ou
e1) effectuer séparément un traitement des trois phases, qui comprend :
1) la neutralisation et/ou le retrait des composants acides formés dans les fèves de cacao par l'intermédiaire de la phase aqueuse,
2) la séparation du beurre de cacao de la phase grasse,
3) la séparation de la poudre de cacao de la phase solide, et
4) la séparation de l'arôme de cacao et d'une poudre polyphénolique d'au moins la phase aqueuse ;
e2) recombiner l'extrait d'arôme de cacao avec l'extrait de beurre de cacao ;
e3) mélanger les extraits recombinés avec au moins ledit extrait de poudre de cacao, et éventuellement avec ledit extrait de poudre polyphénolique et/ou de poudre de lait ;
e4) effectuer le conchage dudit mélange pour préparer un chocolat ; et
e5) broyer finement le chocolat ; et
effectuer un traitement d'instantanéisation de la poudre de cacao obtenue dans l'étape e) ou le chocolat finement broyé obtenu dans l'étape e5) pour obtenir la poudre de cacao instantanée.
